# EUROPÄISCHE PATENTSCHRIFT

(11) **EP 0 654 380 B1**
(45) Veröffentlichungstag und Bekanntmachung des Hinweises auf die Patenterteilung: **27.08.1997**
(21) Anmeldenummer: 94116305.7
(22) Anmeldetag: 17.10.1994
(51) Int. Cl.: B60R 9/04

(54) **Dachreling für Fahrzeuge**
Roof rails for vehicles
Rails de toit pour véhicules

(30) Priorität: 23.11.1993 DE 4339879
(43) Veröffentlichungstag der Anmeldung: 24.05.1995
(73) Patentinhaber: Happich Fahrzeug-Dachsysteme GmbH, D-42285 Wuppertal (DE)
(72) Erfinder: Fisch, Fritz, D-42111 Wuppertal (DE); Lumpe, Karl-Heinz, S-42279 Wuppertal (DE); Kolodziej, Klaus, D-42327 Wuppertal (DE)

(56) Entgegenhaltungen:
- US-A- 4 279 368
- US-A- 4 358 037
- US-A- 4 834 448
- US-A- 5 069 377

## Beschreibung

Die Erfindung bezieht sich auf eine Dachreling für Fahrzeuge mit einem Holm, der an Jedem Ende über einen Stützfuß am zugehörigen Fahrzeugdach abstützbar ist.

Eine Dachreling der gattungsgemäßen Art ist in der DE-PS 40 04 829 gezeigt. Wie sich aus dieser Druckschrift ergibt, besteht eine Dachreling üblicherweise aus mindestens einem Holm an jeder Dachseite und mindestens zwei jeweils einen Holm tragenden Relingfüßen. Zur Montage werden die Holme und Füße zusammengesteckt, und die Füße werden mit Gewindebolzen bestückt, deren überstehenden Enden durch Bohrungen im Dachblech hindurchgeführt werden. Auf die Gewindebolzen werden von der anderen Seite des Dachblechs her Schraubenmuttern aufgebracht.

Der Aufwand bei der Herstellung einer herkömmlichen Dachreling ist beachtlich. So müssen die Holme für sich gefertigt und entsprechend der Dachkontur oftmals in zwei Ebenen gebogen werden. Auch die Füße müssen separat hergestellt und hinsichtlich der Oberfläche den Holmen angepaßt werden, was trotz hohem Aufwand nicht immer gewährleistet ist. Oftmals sind Glanzunterschiede und nach erfolgter Montage ein Versatz zwischen den Füßen und den Holmen festzustellen. Von besonderem Nachteil bei Dachrelings herkömmlicher Art ist auch deren relativ hohes Eigengewicht, denn die Füße werden oftmals als massive Gußstücke ausgeführt. Dadurch wiederum ist, abhängig von der Stilistik der Stützfüße, oftmals ein erheblicher Schleif- und Polieraufwand erforderlich, um eine dekorativ einwandfreie Oberfläche zu erzielen. Da diese Tätigkeiten nur manuell ausgeführt werden können, ergeben sich auch negative Auswirkungen auf den Teilepreis.

Die US-A-4 358 037 zeigt einen aus einem Rohrkörper gebildeten Querträger einer Dach-Lastenträgervorrichtung für ein Fahrzeug, der an jedem Ende über einen Stützfuß an einer zugehörigen, auf dem Fahrzeugdach befestigten Trägerschiene abgestützt ist, wobei der Stützfuß aus dem Rohrkörpern besteht und so geformt ist, daß er einen nach unten abfallenden Bogenteil und eine sich daran anschließende, frei auslaufende, im wesentlichen ebene Stützfläche aufweist, die höhenbeabstandet jedoch im wesentlichen parallel zum Querträger verläuft und weiterhin so geformt ist, daß sich von oben her gegen die Stützfläche ein abgeplatteter Wandungsbereich des Rohrkörpers abstützt, wobei die Stützfläche und der darauf abgestützte Wandungsbereich von einer Bohrung zum Durchführen eines Befestigungselements durchsetzt sind. Bei dieser Dachlastenträgervorrichtung handelt es sich aber nicht um eine Dachreling.

Durch die US-A-4 834 448 ist ein sich quer über ein Fahrzeugdach erstreckender Gepäckträger mit in Dachrinnen des Fahrzeugs befestigbaren Stützfüßen bekannt geworden, wobei auf den Stützfüßen jeweils eine Abdeckkappe angeordnet ist.

Der Erfindung liegt daher die Aufgabe zugrunde, eine Dachreling der eingangs genannten Art zur Verfügung zu stellen die sich bei relativ einfacher und kostengünstiger Herstellbarkeit durch ein besonders gutes Aussehen, geringes Gewicht und einfache Montage am Fahrzeug auszeichnen soll.

Gemäß der Erfindung wird diese Aufgabe dadurch gelöst, daß jeder Stützfuß aus einem rohrförmigen Strangpreßprofil besteht und so geformt ist, daß er einen nach unten abfallenden Bogenteil und eine sich daran anschließende, frei auslaufende, im wesentlichen ebenen Stützfläche aufweist, die höhenbeabstandet jedoch im wesentlichen parallel zum Holm verläuft und weiterhin so geformt ist, daß sich von oben her gegen die Stützfläche ein abgeplatteter Wandungsbereich des Strangpreßprofils abstützt, wobei die Stützfläche und der darauf abgestützte Wandungsbereich von einer Bohrung zum Durchführen eines Befestigungselements durchsetzt sind und wobei auf jedem Fuß eine Abdeckkappe angeordnet ist.

Von besonderer Bedeutung ist die durch die erfindungsgemäßen Maßnahmen erzielte Gewichtsreduktion und Kosteneinsparung im Vergleich zu einer Dachreling mit massiven Gußfüßen. Der in den Stützfüßen jeweils vorgesehene Lochdurchzug ermöglicht eine einfache Montage, auch im Hinblick auf eine etwaige Nachrüstung. Die Befestigungselemente werden durch die vorgesehenen Abdeckkappen, denen im wesentlichen eine Zierfunktion zukommt, den Blicken eines Betrachters entzogen, so daß die erfindungsgemäße Dachreling insbesondere auch eine stilistisch ansprechende Gesamtausbildung aufweist.

Eine besonders bevorzugte Ausgestaltung der Erfindung sieht vor, daß jeder Endbereich des Holms zu einem Stützfuß geformt und somit der Holm und die Stützfüße als einstückige Baueinheit ausgebildet sind.

Durch diese Maßnahme kann die separate Herstellung des Holms einerseits und der Stützfüße andererseits ebenso entfallen wie der Zusammenbau dieser Teile, womit sich eine beträchtliche Kosteneinsparung erzielen läßt.

Um das gute Aussehen der Dachreling noch zu optimieren, kann in Ausgestaltung der Erfindung vorgesehen sein, daß jeweils im Übergangsbereich vom Holm zum Bogenteil der Stützfüße ein stufenförmiger Absatz ausgebildet ist, der einen versatzfreien Übergang zwischen dem Holm und dem freien sich auf den Absatz abstützenden Ende jeder Abdeckkappe ermöglicht.

Eine weitere Ausgestaltung der Erfindung sieht vor, daß die Abdeckkappen mittels angeformter Klipselemente an den Stützfüßen festlegbar sind. Dabei weist jeder Stützfuß mindestens einen Wandungsdurchbruch und Hinterschneidungen zum Ein- und Hinterrasten der an den Abdeckkappen angeformten Klipselementen auf.

In Weiterbildung der Erfindung kann mit besonderem Vorteil vorgesehen sein, daß die Abdeckkappen jeweils über einen Gelenkstift schwenkbeweglich an den Stützfüßen derart angelenkt sind, daß sie im aufgeschwenkten Zustand einen Zugang zu den Befestigungselementen ermöglichen.

Diese Maßnahme kommt insbesondere den Benutzern einer Dachreling zustatten, die die Dachreling bei Lackierarbeiten am Fahrzeugdach abnehmen wollen. Durch die Anlenkung der Abdeckkappen sind dieselben unverlierbar an den Stützfüßen gehalten und bedürfen keiner besonderen Aufmerksamkeit in bezug auf die Unterbringung.

Gemäß einer weiteren Ausgestaltung der Erfindung kann jeder Stützfuß mit einer nach unten vorstehenden durchlaufenden Rippe mit links und rechts daneben verbleibenden Freiräumen ausgebildet sein und jeweils einen in die Holmenden passenden Steckzapfen aufweisen, wobei in den Endbereichen des Holms Schlitzöffnungen zur Aufnahme der an jedem Stützfuß befindlichen Rippe vorgesehen sind.

Der gegenüber dem Holm dadurch verringerte Querschnitt der Stützfüße ist unbeachtlich, weil dieser durch die Abdeckkappen auszugleichen ist. Die Abdeckkappen weisen nämlich in bevorzugter Weiterbildung der Erfindung jeweils einen U-förmigen Querschnitt mit einem den Stützfuß kopfseitig abdeckenden Steg und zwei den Stützfuß beidseitig abdeckenden Schenkeln auf und an den freien Randbereichen der Schenkel sind nach innen gerichtete Materialvorsprünge angeformt, die in die Freiräume der Stützfüße einrastbar sind.

Es versteht sich, daß die Wanddicke der Abdeckkappen der Wanddicke des Holms entsprechen sollte, um einen glatten Übergang zwischen Holm und Abdeckkappen gewährleisten zu können.

An der Stegunterseite jeder Abdeckkappe sind zum einen die Klipselemente und zum anderen ein Lagerbock mit einem Langloch für den Gelenkstift angeformt.

Ausführungsbeispiels der Erfindung werden nachfolgend anhand der Zeichnung näher erläutert, und es zeigen:
- Fig. 1: eine erste Ausführungsform der Dachreling mit einem am Holm angeformten Stützfuß im Schnitt,
- Fig. 2: die Dachreling nach Fig. 1 mit einer am Stützfuß festgelegten Abdeckkappe im Schnitt,
- Fig. 3: einen Längsschnitt durch die Abdeckkappe nach Fig. 2,
- Fig. 4: einen Schnitt etwa folgend der Linie IV-IV in Fig. 2,
- Fig. 5: eine zweite Ausführungsform der Dachreling mit einem am Holm befestigten Stützfuß im Schnitt, etwa folgend der Linie V-V nach Fig. 6,
- Fig. 6: einen Schnitt etwa folgend der Linie VI -VI nach Fig. 5 und
- Fig. 7: einen Schnitt VII-VII nach Fig. 5.

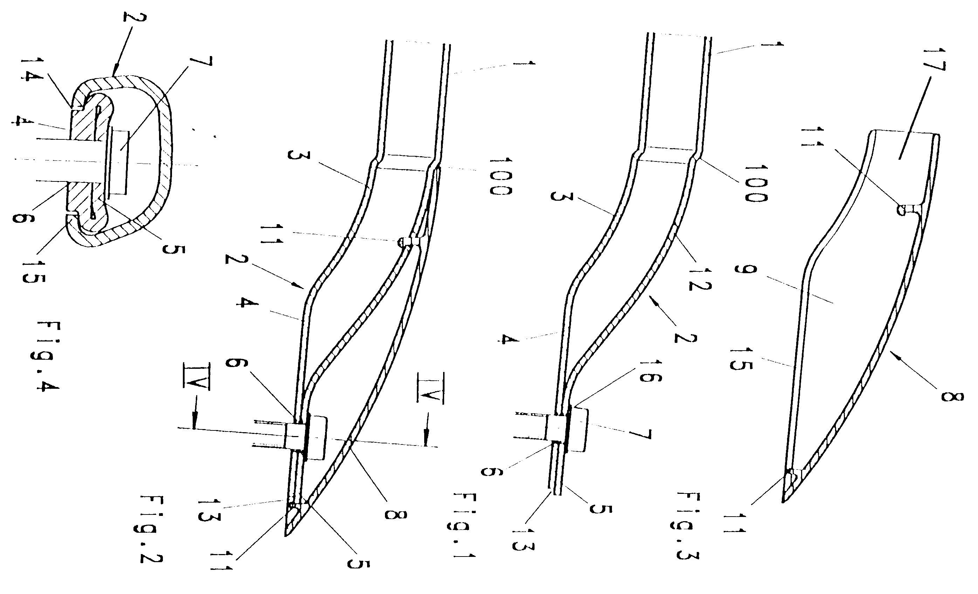

Kernstück der neuen Dachreling gemäß Fig. 1 bis 4 bildet der Holm 1, der an den Enden so gebogen und verformt ist, daß er einstückig am Holm 1 angeformte Stützfüße 2 bildet, von denen die Zeichnung allerdings nur einen zeigt. Jeder Stützfuß 2 ist mit einem nach unten abfallenden Bogenteil 3 und einer sich daran anschließenden, frei auslaufenden im wesentlichen ebenen Stützfläche 4 ausgebildet, die höhenbeabstandet jedoch im wesentlichen parallel zum Holm 1 verläuft. Von oben her stützt sich an der Stützfläche 4 ein abgeplatteter Wandungsbereich 5 des Holmendes ab. Eine Bohrung 6 zum Durchführen eines Befestigungselements 7 durchsetzt den Wandungsbereich des Stützfußes 2. Der Stützfuß 2 wird optisch ergänzt durch eine Abdeckkappe 8, die den Verformungsbereich von oben her und mit angeformten Wangen 9 auch seitlich abdeckt.

Bei der Herstellung einer Dachreling wird ein auf Maß abgelängter Holm an den Endbereichen z.B. in einem Gesenk oder einer speziellen Hilfsvorrichtung abgeplattet und verformt. Dabei empfiehlt es sich, die Abplattung und Verformung an beiden Holmenden gleichzeitig vor-zunehmen, weil sich hierdurch kurze Taktzeiten und eine gute Ausfluchtung der Stützflächen beider Stützfüße erzielen lassen. Bei der Verformung der Holmenden wird vorzugsweise gleichzeitig ein stufenförmiger Absatz 100 jeweils im Übergangsbereich vom Holm 1 zum Bogenteil 3 ausgebildet, der einen versatzfreien Übergang zwischen dem Holm 1 und dem freien sich auf den Absatz 100 abstützenden Ende jeder Abdeckkappe 8 ermöglicht, was noch durch eine Anfasung 17 am Kappenende unterstützt wird.

Die Abdeckkappe 8 ist am Stützfuß 2 mittels angeformter Klipselemente 11 festlegbar. Hierfür weist jeder Stützfuß 2 einen Wandungsdurchbruch 12 und Hinterschneidungen 13 zum Hinterrasten auf. In Hinterschneidungen 14 greifen an der Abdeckkappe 8 angeformte Wulste 15 ein.

Kernstück der Dachreling nach Fig. 1 bis 4 bildet somit der Holm 1, der an den Enden so gebogen wird, daß er auf der Unterseite der Kontur einer herkömmlichen Stütze der Dachreling entspricht. Zusätzlich wird der Holm 1 im Endbereich so verformt, daß eine Stützfläche 4 entsteht, welche als Anlage zum Fahrzeugdach genutzt wird. Die Befestigung der Reling erfolgt von "oben" mittels einer normalen Zylinderschraube als Befestigungselement 7 mit zusätzlicher Dichtscheibe 16. Da zwischen der Abdeckkappe 8 und dem Holm 1 bzw. Stützfuß 2 immer ein Spalt vorhanden ist, durch den Wasser ins Innere gelangen kann, ist eine Abdichtung der Bohrung 6 erforderlich. Die aufgezeigte Art der Befestigung stellt nur eine der möglichen Befestigungsvarianten dar, denn z.B. können aus dem Fahrzeugdach auch Gewindebolzen herausragen die von den Bohrungen 6 aufgenommen werden. Mittels Schraubenmuttern können dann die Stützfüße auf dem Dach verspannt werden, wobei es zweckmäßig ist, zwischen dem Dach und der Stützfläche 4 eine Dichtung z.B. aus Moosgummi anzuordnen.

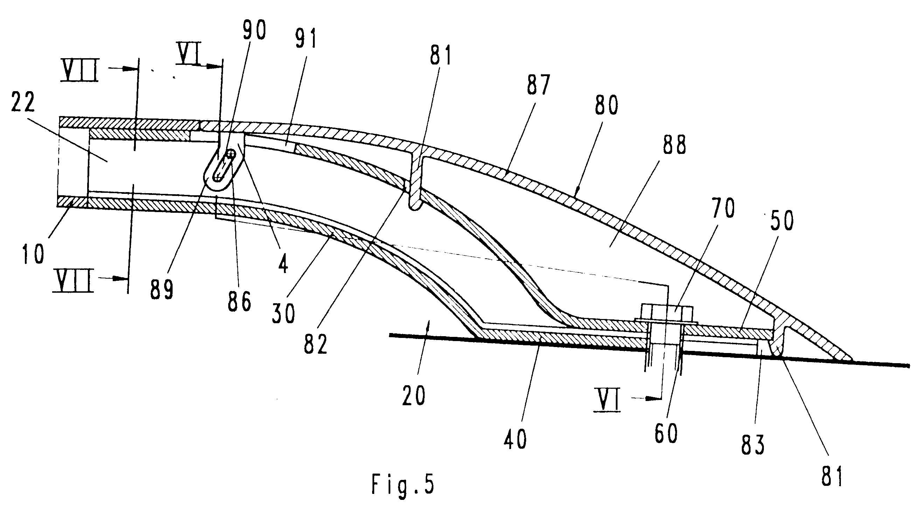

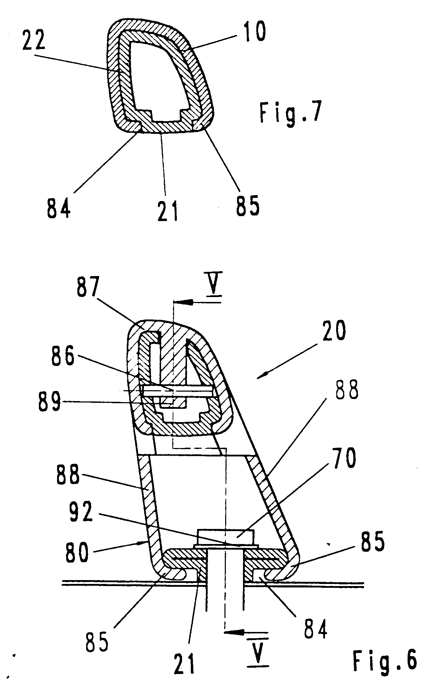

Die Ausführungsform nach Fig. 5 bis 7 ist von der nach Fig. 1 bis 4 insofern unterschiedlich als hier der Holm 10 und die Stützfüße 20 separate Bauteile sind. Ebenso wie der Holm 10 sind die Stützfüße 20 aus einem Strangpreßprofil, vorzugsweise Aluminium gebildet. Jeder Stützfuß 20 ist mit einem nach unten abfallenden Bogenteil 30 und einer sich daran anschließenden, frei auslaufenden im wesentlichen ebenen Stützfläche 40 ausgebildet, die höhenbeabstandet jedoch im wesentlichen parallel zum Holm 10 verläuft. Von oben her stützt sich an der Stützfläche 40 ein abgeplatteter Wandungsbereich 50 des Strangpreßprofils ab. Eine Bohrung 60 zum Durchführen eines Befestigungselements 70 durchsetzt den Wandungsbereich 50 und den die Stützfläche 40 bildenden Wandungsbereich des Stutzfußes 20. Der Stützfuß 20 wird optisch ergänzt durch eine Abdeckkappe 80, die den Verformungsbereich von oben her und auch seitlich abdeckt.

Die Abdeckkappe 80 weist Klipselemente 81 auf, mit denen sie am Stützfuß 20 festlegbar ist. Hierfür weist der Stützfuß 20 einen Wandungsdurchbruch 82 und Hinterschneidungen 83 zum Ein- bzw. Hinterrasten auf. In Hinterschneidungen 84 (Freiräume) greifen an der Abdeckkappe 80 angeformte Materialvorsprünge 85 ein. Jede Abdeckkappe 80 ist jeweils über einen Gelenkstift 86 schwenkbeweglich an den Stützfüßen 20 angelenkt, derart, daß sie im aufgeschwenkten Zustand, wie in Fig. 5 strichpunktiert dargestellt, einen Zugang zu den Befestigungselementen 70 ermöglichen.

Jeder Stützfuß 20 ist mit einer nach unten vorstehenden Rippe 21 mit links und rechts daneben verbleibenden Freiräumen, die die Hinterschneidungen 84 bilden ausgebildet und weist jeweils ferner einen in die Holmenden passenden Steckzapfen 22 auf, der in eine im Endbereich des Holms 10 vorgesehene Schlitzöffnung formschlüssig ein-greift. Zwischen Holm 10 und Steckzapfen 22 sollte eine Verklebung und/oder eine Verstiftung vorgesehen werden.

Die Abdeckkappe 80 weist einen U-förmigen Querschnitt mit einem den Stützfuß kopfseitig abdeckenden Steg 87 und zwei den Stützfuß 20 beidseitig abdeckende Schenkel 88 auf. Am freien Randbereich der Schenkel 88 sind nach innen gerichtete Materialvorsprünge 85 angeformt, die in die Freiräume 84 einrastbar sind. An der Stegunterseite der Abdeckkappe 80 sind die Klipselemente 81 sowie ein Lagerbock 89 angeformt, wobei der Lagerbock 89 ein Langloch 90 für den Gelenkstift 86 aufweist. Der Lagerbock 89 kann am freien Ende eine hinterschnittene Schlitzöffnung aufweisen, so daß bei vormontiertem Gelenkstift die Abdeckkappe durch Aufdrücken mit dem Gelenkstift verbunden werden kann. Zum Durchführen des Lagerbocks 89 ist im Steg 87 der Abdeckkappe 80 eine Öffnung 91 vorgesehen.

Die Befestigung der Reling erfolgt bevorzugt von oben mit einer handelsüblichen Zylinder- bzw. Sechskantschraube als Befestigungselement 70 unter der sich eine Dichtscheibe 92 befindet.

Die Ausbildung der Stützfüße 2 kann der Ausbildung der Stützfüße 20 entsprechen, während auch die Ausbildung der Abdeckkappe 8 der Ausbildung der Abdeckkappe 80 entsprechen kann.

## Patentansprüche

1. Dachreling für Fahrzeuge mit einem Holm (1, 10), der an jedem Ende über einen Stützfuß (2, 20) an dem zugehörigen Fahrzeugdach abstützbar ist, dadurch gekennzeichnet, daß der Stützfuß (2, 20) aus einem rohrförmigen Strangpreßprofil besteht und so geformt ist, daß er einen nach unten abfallenden Bogenteil (3, 30) und eine sich daran anschließende, frei auslaufende, im wesentlichen ebene Stützfläche (4, 40) aufweist, die höhenbeabstandet jedoch im wesentlichen parallel zum Holm (1, 10) verläuft und weiterhin so geformt ist, daß sich von oben her gegen die Stützfläche (4, 40) ein abgeplatteter Wandungsbereich (5, 50) des Strangpreßprofils abstützt, wobei die Stützfläche (4, 40) und der darauf abgestützte Wandungsbereich (5, 50) von einer Bohrung (6, 60) zum Durchführen eines Befestigungselements (7, 70) durchsetzt sind und wobei auf dem Stützfuß (2, 20) eine Abdeckkappe (8, 80) angeordnet ist.

2. Dachreling nach Anspruch 1, dadurch gekennzeichnet, daß jeder Endbereich des Holms (1) zu einem Stützfuß (2) geformt und somit der Holm (1) und die Stützfüße (2) als einstückige Baueinheit ausgebildet sind.

3. Dachreling nach Anspruch 2, dadurch gekennzeichnet, daß jeweils im Übergangsbereich vom Holm (1) zum Bogenteil (3) ein stufenförmiger Absatz (100) ausgebildet ist, der einen versatzfreien Übergang zwischen dem Holm (1) und dem freien sich auf den Absatz (100) abstützenden Ende jeder Abdeckkappe (8) ermöglicht.

4. Dachreling nach wenigstens einem der Ansprüche 1 bis 3, dadurch gekennzeichnet, daß die Abdeckkappen (8, 80) mittels angeformter Klipselemente (11, 81) an den Stützfüßen (2, 20) festlegbar sind.

5. Dachreling nach wenigstens einem der Ansprüche 1 bis 4, dadurch gekennzeichnet, daß jeder Stützfuß (2, 20) mindestens einen Wandungsdurchbruch (12, 82) und Hinterschneidungen (13, 83) zum Ein- und Hinterrasten der an den Abdeckkappen (8, 80) angeformten Klipselementen (11, 81) aufweist.

6. Dachreling nach wenigstens einem der Ansprüche 1 bis 5, dadurch gekennzeichnet, daß die Abdeckkappen (8, 80) jeweils über einen Gelenkstift (86) schwenkbeweglich an den Stützfüßen (2, 20) derart angelenkt sind, daß sie im aufgeschwenkten Zustand einen Zugang zu den Befestigungselementen (7, 70) ermöglichen.

7. Dachreling nach wenigstens einem der Ansprüche 1 oder 4 bis 6, dadurch gekennzeichnet, daß jeder Stützfuß (2, 20) mit einer nach unten vorstehenden durchlaufenden Rippe (21) mit links und rechts daneben verbleibenden Freiräumen ausgebildet ist und jeweils einen in die Holmenden passenden Steckzapfen (22) aufweist und daß in den Endbereichen des Holms (1, 10) Schlitzöffnungen zur Aufnahme der an jedem Stützfuß befindlichen Rippe (21) vorgesehen sind.

8. Dachreling nach wenigstens einem der Ansprüche 1 bis 7, dadurch gekennzeichnet, daß die Abdeckkappe (8, 80) einen U-förmigen Querschnitt mit einem den Stützfuß (2, 20) kopfseitig abdeckenden Steg (87) und zwei den Stützfuß (2, 20) beidseitig abdeckenden Schenkeln (88) aufweist und daß an den freien Randbereichen der Schenkel (88) nach innen gerichtete Materialvorsprünge (85) angeformt sind, die in die Freiräume des Stützfußes einrastbar sind.

9. Dachreling nach wenigstens einem der Ansprüche 1 bis 8, dadurch gekennzeichnet, daß an der Stegunterseite der Abdeckkappe (8, 80) zum einen die Klipselemente (11, 81) und zum anderen ein Lagerbock (89) mit einem Langloch (90) für den Gelenkstift (86) angeformt sind.

## Claims

1. Roof rail for vehicles having a strut (1, 10) which can be supported at each end on the associated vehicle roof via a supporting foot (2, 20), characterized in that the supporting foot (2, 20) consists of a tubular extruded profile and is shaped in such a manner that it has a downwardly sloping bow part (3, 30) and a freely emerging, essentially planar supporting surface (4, 40) which adjoins said bow part, runs spaced apart in terms of height but essentially parallel to the strut (1, 10) and furthermore is shaped in such a manner that a flattened wall region (5, 50) of the extruded profile is supported from above against the supporting surface (4, 40), the supporting surface (4, 40) and the wall region (5, 50) supported thereon being penetrated by a hole (6, 60) for guiding through a fastening element (7, 70), and a covering cap (8, 80) being arranged on the supporting foot (2, 20).

2. Roof rail according to Claim 1, characterized in that each end region of the strut (1) is shaped to form a supporting foot (2) and hence the strut (1) and the supporting feet (2) are designed as an integral constructional unit.

3. Roof rail according to Claim 2, characterized in that a stepped shoulder (100) is constructed in each case in the transition region from the strut (1) to the bow part (3), which shoulder makes possible an offset-free transition between the strut (1) and that free end of each covering cap (8) which is supported on the shoulder (100).

4. Roof rail according to at least one of Claims 1 to 3, characterized in that the covering caps (8, 80) can be secured on the supporting feet (2, 20) by means of moulded-on clip elements (11, 81).

5. Roof rail according to at least one of Claims 1 to 4, characterised in that each supporting foot (2, 20) has at least one wall passage (12, 82) and undercuts (13, 83) for the snapping-in and rear latching of the clip elements (11, 81) moulded onto the covering caps (8, 80).

6. Roof rail according to at least one of Claims 1 to 5, characterized in that the covering caps (8, 80) are articulated pivotably on the supporting feet (2, 20), in each case via a pivot pin (86), in such a manner that when pivoted upwards they allow access to the fastening elements (7, 70).

7. Roof rail according to at least one of Claims 1 or 4 to 6, characterized in that each supporting foot (2, 20) is constructed with a continuous rib (21) which protrudes downwards and has clearances remaining next to it on the left and right, and in each case has a plug-in pin (22) which fits into the ends of the strut, and in that slot openings for receiving the rib (21) situated on each supporting foot are provided in the end regions of the strut (1, 10).

8. Roof rail according to at least one of Claims 1 to 7, characterized in that the covering cap (8, 80) has a U-shaped cross section with a web (87) covering the top side of the supporting foot (2, 20) and two limbs (88) covering the supporting foot (2, 20) on both sides, and in that onto the free edge regions of the limbs (88) there are moulded inwardly directed material projections (85) which can be snapped into the clearances in the supporting foot.

9. Roof rail according to at least one of Claims 1 to 8, characterized in that on the web underside of the covering cap (8, 80) there are moulded on the one hand the clip elements (11, 81) and on the other hand a bearing block (89) having an elongated hole (90) for the pivot pin (86).

## Revendications

1. Rail de toit pour véhicule avec un longeron (1, 10), qui peut être supporté à chaque extrémité par un pied de support (2, 20) sur le toit du véhicule associé, caractérisé en ce que le pied de support (2, 20) se compose d'un profilé extrudé tubulaire et est formé de telle manière qu'il présente une partie cintrée (3, 30) descendant vers le bas et une surface de support (4, 40) essentiellement plane, courant librement, qui lui est connectée, qui s'étend à une certaine distance d'écartement en hauteur mais toutefois essentiellement parallèlement au longeron (1, 10), et qui est en outre formée de telle manière, qu'une zone de paroi (5, 50) aplatie du profilé extrudé s'appuie contre la surface de support (4, 40) depuis le haut, la surface de support (4, 40) et la zone de paroi (5, 50) qu'elle supporte étant traversées par un alésage (6, 60) destiné à faire passer un élément de fixation (7, 70), et un couvercle de recouvrement (8, 80) étant disposé par-dessus le pied de support (2, 20).

2. Rail de toit selon la revendication 1, caractérisé en ce que chaque zone d'extrémité du longeron (1) est formée en un pied de support (2) et que le longeron (1) et les pieds de support (2) sont de la sorte formés en tant qu'unité construite d'une pièce.

3. Rail de toit selon la revendication 2, caractérisé en ce qu'il est formé, dans la zone de transition entre le longeron (1) et la partie cintrée (3), un décrochement étagé (100), qui permet une transition sans déport entre le longeron (1) et l'extrémité de chaque couvercle de recouvrement (8) libre s'appuyant sur le décrochement (100).

4. Rail de toit selon au moins une des revendications 1 à 3, caractérisé en ce que les couvercles de recouvrement (8, 80) peuvent être fixés au moyen d'éléments de clipsage formés (11, 81) sur les pieds de support (2, 20).

5. Rail de toit selon au moins une des revendications 1 à 4, caractérisé en ce que chaque pied de support (2, 20) présente au moins une ouverture de paroi (12, 82) et des contre-dépouilles (13, 83) pour l'encliquetage et la rétention des éléments de clipsage (11, 81) formés sur les couvercles de recouvrement (8, 80).

6. Rail de toit selon au moins une des revendications 1 à 5, caractérisé en ce que les couvercles de recouvrement (8, 80) sont respectivement articulés à pivotement aux pieds de support (2, 20) par le biais d'une broche d'articulation (86), de telle sorte qu'ils permettent, dans l'état pivoté vers le haut, un accès aux éléments de fixation (7, 70).

7. Rail de toit selon au moins une des revendications 1 ou 4 à 6, caractérisé en ce que chaque pied de support (2, 20) est formé avec une nervure (21) s'étendant en saillie vers le bas, avec des espaces libres restants adjacents à gauche et à droite, et présente respectivement un tourillon d'emboîtement (22) s'adaptant dans les extrémités du longeron et en ce que des ouvertures en forme de fente sont prévues dans les zones d'extrémité du longeron (1, 10) pour recevoir la nervure (21) se trouvant sur chaque pied de support.

8. Rail de toit selon au moins une des revendications 1 à 7, caractérisé en ce que le couvercle de recouvrement (8, 80) présente une section transversale en forme de U avec une âme (87) recouvrant le pied de support (2, 20) du côté de la tête et deux branches (88) recouvrant le pied de support (2, 20) de chaque côté, et en ce qu'au niveau des zones de bord libres des branches (88) sont formées des parties de matériau en saillie (85) dirigées vers l'intérieur, qui peuvent être encliquetées dans les espaces libres du pied de support.

9. Rail de toit selon au moins une des revendications 1 à 8, caractérisé en ce qu'il est formé, à la partie inférieure de l'âme du couvercle de recouvrement (8, 80), d'une part les éléments de clipsage (11, 81), et d'autre part un support (89) avec un trou oblong (90) pour la broche d'articulation (86).
